# EUROPEAN PATENT SPECIFICATION

(11) **EP 3 953 859 B1**
(45) Date of publication and mention of the grant of the patent: **02.10.2024**
(21) Application number: 20719229.5
(22) Date of filing: 06.04.2020
(51) Int. Cl.: G06V 40/18

(54) **METHOD AND SYSTEM FOR ESTIMATING EYE-RELATED GEOMETRIC PARAMETERS OF A USER**
VERFAHREN UND SYSTEM ZUR SCHÄTZUNG VON AUGENBEZOGENEN GEOMETRISCHEN PARAMETERN EINES BENUTZERS
PROCÉDÉ ET SYSTÈME D'ESTIMATION DE PARAMÈTRES GÉOMÉTRIQUES LIÉS À L' OEIL D'UN UTILISATEUR

(30) Priority: 10.04.2019 CH 4872019
(43) Date of publication of application: 16.02.2022
(73) Proprietor: Eyeware Tech SA, 1920 Martigny (CH)
(72) Inventor: FUNES MORA, Kenneth Alberto, 1018 Lausanne (CH); ODOBEZ, Jean-Marc, 1815 Clarens (CH); LIU, Gang, Beijing (CN); YU, Yu, 1920 Martigny (CH)
(74) Representative: P&TS SA (AG, Ltd.)
(86) International application number: PCT/IB2020/053252
(87) International publication number: WO 2020/208494

(56) References cited:
- WO-A1-2015/192879
- US-A1- 2018 089 834
- MORA KENNETH ALBERTO FUNES ET AL: "Geometric Generative Gaze Estimation (G3E) for Remote RGB-D Cameras", 2014 IEEE CONFERENCE ON COMPUTER VISION AND PATTERN RECOGNITION, IEEE, 23 June 2014 (2014-06-23), pages 1773 - 1780, XP032649594, DOI: 10.1109/CVPR.2014.229
- PROENCA HUGO ET AL: "Segmenting the periocular region using a hierarchical graphical model fed by texture / shape information and geometrical constraints", IEEE INTERNATIONAL JOINT CONFERENCE ON BIOMETRICS, IEEE, 29 September 2014 (2014-09-29), pages 1 - 7, XP032714791, DOI: 10.1109/BTAS.2014.6996228
- STEFANIA CRISTINA ET AL: "Unobtrusive and pervasive video-based eye-gaze tracking", IMAGE AND VISION COMPUTING, vol. 74, 1 June 2018 (2018-06-01), GUILDFORD, GB, pages 21 - 40, XP055602078, ISSN: 0262-8856, DOI: 10.1016/j.imavis.2018.04.002

## Description

### Field of the invention

The present invention relates to a method and a system for estimating eye-related geometric parameters of a user, in particular the gaze estimation, i.e. the estimation of the direction of the gaze of a user, notably for human-machine interfacing, Virtual Reality, health caring and for mobile applications.

### Description of related art

Eye-related geometric parameters, such as the gaze direction of a user, provide important cues of human behaviours. Gaze directions and movements thereof are indicators of the visual attention as well as of given thoughts and mental states of people.

Gaze estimation provides thus a support to domains like Human-Robot-Interaction (HRI), Virtual Reality (VR), social interaction analysis, or health care. With the development of sensing function on mobile phones, gaze estimation can furthermore provide a support to a wider set of applications in mobile scenarios.

Gaze estimation can be divided into two main classes, i.e. geometric methods and appearance-based methods. Geometric methods rely on geometric models of the eye whose parameters are usually estimated from geometric features, through common methodology called Pupil Centre and Corneal Reflection or PCCR methods, extracted from the eye images. These models can be very precise, but due to their dependency on robust features extraction, high resolution images of the eyes are often required, limiting the mobility of users and the applicability of such method.

Guestrin and Eizenman's work (EEE Transactions on biomedical engineering 53(6), 1124-1133, June 2006*)* describes in detail the theory of estimating eye geometric parameters based on pupil centre and corneal reflection strategies. The authors cover different configurations of light sources and multiple cameras which can lead to invariance to head movements or better properties in terms of need for calibration strategies.

Appearance-based methods on the other hand directly map eye images to the gaze direction, and in recent years, data collections of large datasets and deep learning have helped making great progress. Nevertheless, while these methods can better handle low-resolution images, due to the absence of an explicit eye model, they might also encounter difficulties to adapt models to specific users thereby failing to obtain very accurate results.

The work in K. A. Funes Mora and J.-M Odobez, "Geometric generative gaze estimation (g3e) for remote rgb-d camera. " (CVPR, pp 1773-1780, 2014) tried to reconcile these two sets of approaches. It relied on a geometric generative model which from a given geometric configuration of eyeball parameters was capable of generating coloured eye images. The inference process of such model is capable of retrieving the geometric parameters based on observations of eye image samples which may be augmented with the known point of regard. The inference process would rely on likelihood maps which comprise for each pixel the likelihood of belonging to either the iris, sclera or eyelid skin regions. The likelihood maps were obtained from Gaussian Mixture models applied to the pixel colour and initialized by hand. A likelihood map can also be understood as a colour-driven segmentation of the eye image. Such colour models however are difficult to apply to videos of eye images due to the low image resolution and the concave nature of the eye regions which generate complex shadow patterns. This work is also one embodiment of the invention disclosed in WO 2015/192879.

The work in Proenca Hugo et al. "Segmenting the periocular region using a hierarchical graphical model fed by texture/shape information and geometrical constraints" (International Conference on Biometrics, IEEE, 2014, pages 1-7, XP032714791) discloses an image labelling algorithm for the periocular region that discriminates between seven components (iris, sclera, eyelashes, eyebrows, hair, skin and glasses) according to a model composed of two phases, namely:
1) using several neural networks to infer from a training set posterior probabilities for each image position and class of interest. Each neural network is configured to detect one component and receives local statistics (texture and shape descriptors) from the input data.
2) the posteriors based on data local appearance are combined with geometric constraints and components' adjacency priors, to feed a hierarchical Markov Random Filed (MRF), composed of a pixel and a component layer.

There is room for improvement for retrieving more precisely eye-related geometric parameters of a user which is particularly adapted for both high and low image resolution.

An aim of the present invention is therefore to provide a method and a system for estimating eye-related geometric parameters of a user, for example the eye-gaze direction with better accuracy.

Another aim of the present invention is to provide a method and a system for robust estimation of eye-related geometric parameters of a user, for example the eye-gaze direction even for poor image quality of the user's eye.

A further aim of the present invention is to provide a method and a system with improved performance in image classification and segmentation.

### Brief summary of the invention.

According to the invention, these aims are achieved by means of a method for estimating eye-related geometric parameters of a user, comprising the steps of:
a. retrieving at least one input image observation corresponding to an image of the user's eye comprising distinctive eye regions;
b. using a learning machine for computing one or a plurality of image segmentation maps, so as to classify each pixel of said input image observation into at least one among a plurality of distinctive eye regions;
c. generating through a set of geometric parameters an image geometric model of the user's eye;
d. comparing the image geometric model with at least one image segmentation map;
e. based on this comparison, computing a model correspondence value indicating if said at least one input image observation corresponds to the geometric model of the user's eye;
f. repeating steps c. to e. if the value computed under step e. is below an optimal value wherein at least one parameter in the set of geometric parameters is changed under step c. to generate a new image geometric model of a user's eye for each iteration of steps c. to e. until said model correspondence value reaches the optimal value, and
g. retrieving the eye-related geometric parameters from the latest image geometric model of the user's eye that has been generated.

In an embodiment, the at least one input image observation is augmented by providing data obtained from supervised, semi-supervised or unsupervised calibration procedures.

In an advantageous embodiment, said eye-related geometric parameters correspond to an eye gaze direction of the user, and wherein:
- the image geometric model of the user's eye under step c. corresponds to user's eye gazing at one particular direction,
- said at least one parameter in the set of geometric parameters is changed under step c. to generate a new image geometric model of a user's eye gazing at another direction for each iteration of steps c. to e. until said model correspondence value reaches said optimal value, and
- the gaze direction is retrieved under step g. from said latest image geometric model.

In an embodiment, at least one parametric segmentation map is calculated from said image geometric model of the user's eye. Each pixel of the parametric segmentation map is classified into at least one among a plurality of distinctive eye regions.

Each pixel of the parametric segmentation map may indicate for example at least one probability, log probability or score that this pixel belongs to at least one distinctive eye region.

A plurality of parametric segmentation map may be calculated from the image geometric model. Each the parametric segmentation maps may indicate, for example, to which distinctive eye region each pixel of a projection of the image geometric model belongs, or a probability, a log probability or a score associated with each pixel of a projection of the image geometric model that this pixel belongs to one distinctive eye region.

In an embodiment, step d. comprises comparing the probability, log probability or score assigned to each pixel of at least one image segmentation map with the value of a pixel of at least one parametric segmentation map having the same coordinates.

In an embodiment, the method for estimating eye-related geometric parameters of a user, may comprise:
- determining from at least one parametric segmentation map the distinctive region to which each pixel is supposed to belong according to the image geometric model;
- as part of step d., determining from the at least one image segmentation map a pixel correspondence value corresponding to that distinctive region and indicating the probability, log probability or score that this pixel belongs to that distinctive region;
- as part of step e., adding said pixel correspondence values together to provide said model correspondence value.

In an embodiment, at least one soft parametric segmentation map of the image geometric model is calculated from the image geometric model of the user's eye. At least two, preferably at least three values are assigned to each pixel of the soft parametric segmentation map. These values represent a probability, a log probability or a score that each pixel corresponds to each of the distinctive eye regions of the image geometric model.

At least two values, preferably at least three values may be assigned to each pixel of the image segmentation map. The at least three values represent a probability, a log probability or a score that each pixel corresponds to each of the distinctive eye regions of the at least one input image observation.

In an embodiment, the soft parametric and image segmentation maps are merged together by multiplying each of the at least three values assigned to each pixel of the parametric segmentation map with each of the corresponding at least three values assigned to each pixel of the image segmentation map with the same coordinates. The multiplied values are added for each pixel of the segmentation maps to provide the model correspondence value.

A weighted sum of the probabilities, log probabilities or scores may be computed for each pixel in each image segmentation map with the probability associated with the corresponding value of the corresponding pixel of the image segmentation map.

In an embodiment, the distinctive eye regions are preferably three distinctive eye regions selected from the group comprising the cornea, the pupil, the iris, the sclera and the eyelid.

In an embodiment, the image segmentation maps are image probability maps indicating a probability, a log probability associated with each pixel that this pixel belongs to one distinctive eye region.

In an embodiment, the image segmentation maps are image score maps indicating the score associated with each pixel that this pixel belongs to one distinctive eye region.

In an embodiment, the learning machine comprises a segmentation neural network configured to generate the image segmentation map based on the at least one input image observation.

The segmentation neural network may for example comprise multiple layers configured to generate an image segmentation map for an input.

The segmentation neural network may for example comprise one or a sequence of encoding-decoding or hourglass layers configured to achieve a transformation of the input such that the image segmentation is of the same resolution as the input, or at least a pixel correspondence can be established between the image segmentation map and the input.

In an embodiment, the set of geometric parameters comprises a plurality of parameters among at least: eyeball rotation centre, visual axis offset, eyeball radius, cornea radius, limbus radius, pupil radius, eyelids opening or shape, and left and/or right eye corner.

In an embodiment, the step of retrieving at least one input image observation corresponding to an image of the user's eye having distinctive eye regions comprises pre-processing an image from an image frame. The pre-processing of the image may comprise one or more image adjustments or corrections among: brightness adjustment, contrast adjustment, white balance adjustment, pose head adjustment, noise removal, scaling and/or cropping.

Another aspect of the invention relates to an apparatus for estimating eye-related geometric parameters, comprising:
- a camera for capturing a user's face;
- a database storing user-specific eye and facial geometric parameters, and
- a computing system comprising a memory storing a computer program configured to perform the method as described above.

A further aspect of the invention relates to a computer readable storage medium storing a computer program. The computer program comprises a set of algorithms configured to perform the method as described above.

### Brief description of the Drawings

The invention will be better understood with the aid of the description of several embodiments given by way of examples and illustrated by the figures, in which:
- Figure 1 illustrates a flowchart of a method for tracking an eye-gaze direction of a user according to an embodiment of the invention,
- Figure 2 illustrates a detailed flowchart of a method according to an embodiment of the invention,
- Figure 3 schematically illustrates a parametric segmentation process of a geometric model of a user's eye,
- Figure 4 schematically illustrates a segmentation process of an image of a user's eye using a segmentation neural network,
- Figure 5 schematically illustrates an evaluation process of an eye-gaze direction of a user,
- Figure 6 schematically illustrates the geometry of an eye, and
- Figure 7 schematically illustrates an apparatus for estimating an eye-gaze direction of the user according to an embodiment of the invention.

### Detailed description of possible embodiments of the invention

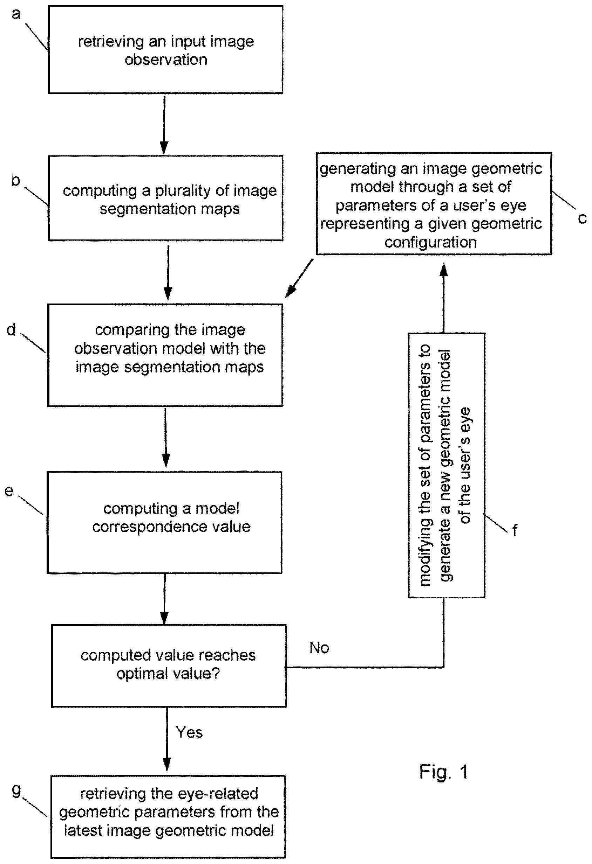

Figure 1 illustrates a flowchart of the general concept of a method for estimating eye-related geometric parameters θ of a user. The eye-related geometric parameters of the user is estimated through the main steps a. to g. of the illustrated method. While the method according to the invention is particularly adapted to estimate an eye-gaze direction of a user, it may however be used for estimating other eye-related geometric parameters such as the opening degree of the eyelid.

An eye image or a series of eye images of a user's eye is first captured, under step a. The eye image may be for example a colour image, an infrared image, an amplitude image, a grayscale image of a pre-processed version of the image data, and/or any combination of those images. The eye image may be pre-processed using pre-processing steps such as to crop the image, scale it, adapt colour, contrast, white-balance, and/or brightness, remove noise, improve sharpness, etc. In one embodiment, the pre-processing includes a head pose correction in order to correct the rotation angle and position of the head, and the camera viewpoint or the scale of the eye. The pre-processing may also be supported by depth measurements from stereo cameras, structured-light cameras, time-of-flight cameras, or other depth sensing devices. In one embodiment, the head-pose correction is estimated based on 3d models of the facial region and/or depth measurements around the face region. The captured and possibly pre-processed image is hereafter referred to as an input image observation 10.

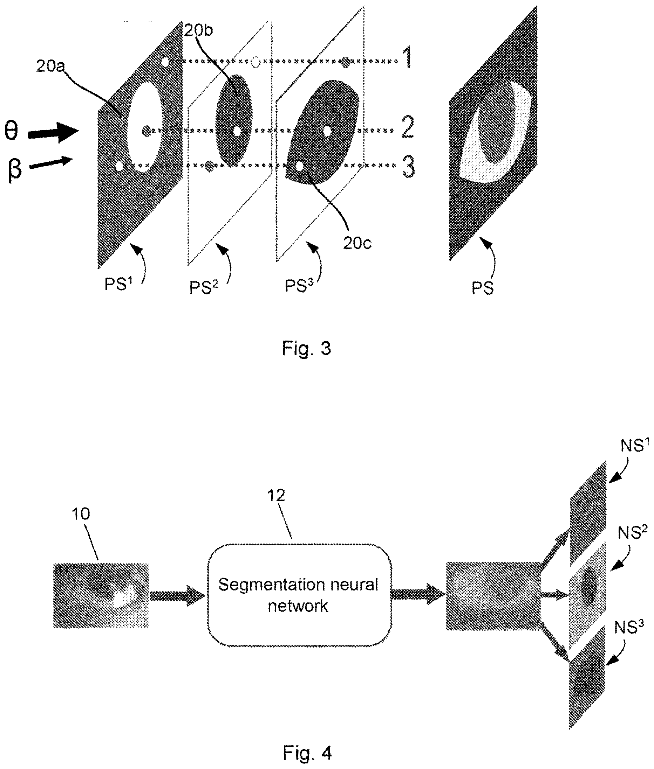

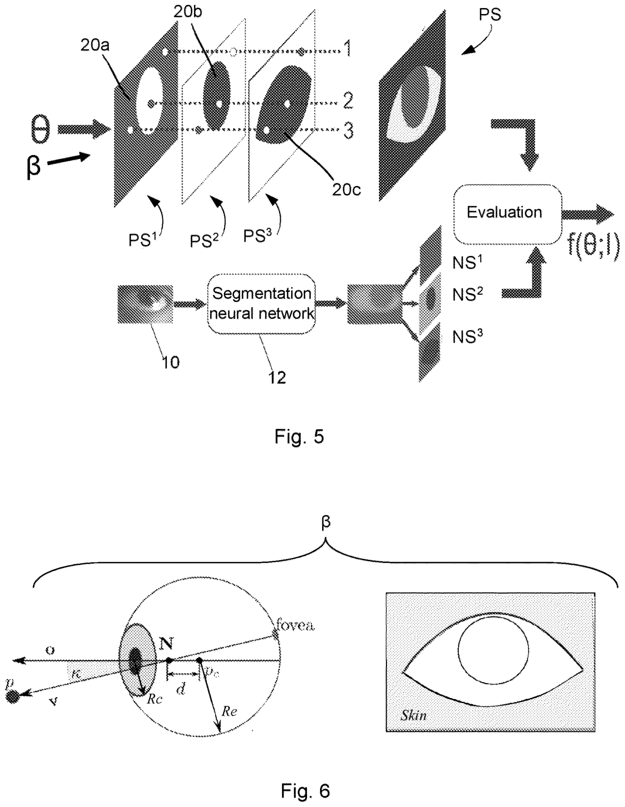

The captured eye image or series of eye images of a user's eye may be augmented by providing ground truth data, such as the point of regard, by retrieving the underlying user specific geometry such as the eyeball radius, position of the head, etc (see Figures 3 and 5 in combination with Figure 6). This information may be available only for a subset of the input eye images and be obtained from explicit or implicit calibration procedures. For example, a user is instructed to gaze at certain points in space. Alternatively, a given behaviour is observed or elicited allowing to retrieve an approximate point of regard, or contextual information such as observed content can be used. The point of regard may then be represented as a probability distribution instead of a single point.

In an embodiment, the input image observation may capture beyond the eye region and can contain the entire body, the entire face, or a region containing both eyes at the same time.

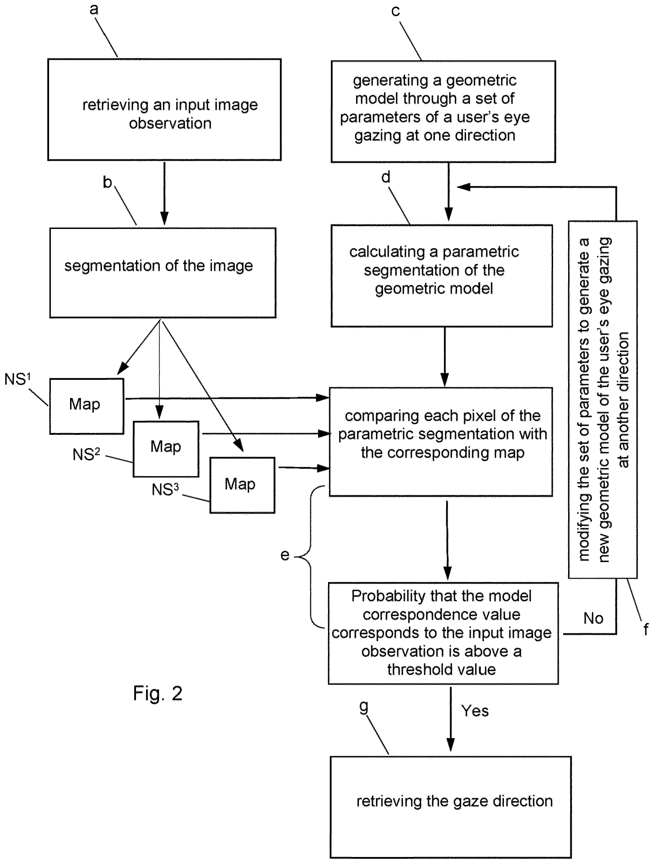

Each pixel of the input image observation 10 is then classified into one among a finite number of distinctive eye regions, for example two or three distinctive eye regions, such as eyelid, cornea, or sclera. The cornea region can be understood as the region comprising the pupil, iris and limbus together. More distinctive eye regions may be needed depending on the application. For example, each pixel of the input image observation 10 may be classified into one among fourth distinctive regions, i.e. the above three distinctive eye regions and an additional distinctive region for the pupil alone for pupillometry applications. The classification is preferably performed with a learning machine, such as a neural network 12, and results into a plurality of image segmentation maps NS¹, NS², NS³ as part of step b. shown in Figures 2 and 4. Each image segmentation map is associated with one distinctive eye region and may consist for example in a probability map indicating a probability, a log probability, or a score, that each pixel of the input image observation 10 belongs to the corresponding distinctive eye region.

Under step c, an image geometric model is independently generated, based on a specific geometric configuration as shown in Figure 1, for example a set of parameters of a user's eye gazing at one particular direction as shown in Figure 2. With reference to Figure 6, these parameters may for example include or be any combination of parameters of the eye, such as the eyeball radius *R*e, the cornea radius *R*c, the left and/or right eye corners, etc, and other parameters related to the gazing direction or on other parameters, such as for example the eyeball rotation p_{c}, the visual axis offset k, the nodal point distance from *P*c (d). Moreover, during the optimization process, a set of the parameters may be fixed whereas the other parameters are modified to find their optimal values. Statistics or information, such as the standard deviation of the eyeball size for a given population, may also be used as part of the model correspondence value computation, as prior or regularization terms in a similar fashion to WO 2015/192879.

The image geometric model may be a 3D or mathematical model of the eye with a specific geometric configuration on size, position, visual axis, and other geometric values as well as gazing into one particular direction, as well as a 2D or 3D representation of the eyelids shape and opening, which is then represented as a 2D image by projecting that model onto a projection plane, for example a plane perpendicular to the camera pointing direction or a plane pointing from a predefined position with respect to the head coordinate system.

In an embodiment, the image geometric model may be computed from a set of images of the user's eye gazing at a known direction, for example during a calibration session, in order to determine the parameters of the user's eye which are independent from the gazing direction. The calibration may be supervised, unsupervised, or partially supervised. A subset of parameters of the geometric model of the user's eye may also be retrieved without any image of the user eye. For example, a user independent model could initially be used, for instance a model generated from a plurality of eye images from different users. In an embodiment, the geometric model is generated by interpolating models from different users sharing some common features with the user such as sex, ethnicity, age etc. In an embodiment, the fixed parameters of the geometric model may be user independent and defined by a set of geometric statistics, which can be retrieved from prior studies or from the training data for a set of users.

The image geometric model of the user under a first assumed geometric configuration is then compared with the segmentation maps NS¹, NS², NS³ provided by the learning machine (step d). In the case where the geometric configuration to be found is the gazing direction, the first gazing direction may be for example the previously determined eye gazing direction if the method is used for eye tracking the direction of the eye in a series of frames. The gazing direction determines a first set of variable parameters (eyeball rotation pc, the visual axis offset k, the nodal point distance from Pc (d)) of the geometric model.

The first geometric configuration parameters may also be obtained from prior knowledge information such as statistics of eyeball geometry computed over certain demographic groups.

This comparison results in a model correspondence value indicating if the input image observation 10 corresponds to the geometric model of the user's eye gazing at the selected particular direction.

Steps c to e are repeated wherein the set of geometric parameters is changed under step c. to generate a new image geometric model of a user's eye for each iteration of steps c. to e. with the objective of increasing the model correspondence value until said value reaches an optimal value. As for most optimization algorithms, small changes are applied to one or more geometric parameters iteratively in order to get closer to the optimal value. For example, the value of said one or more parameters may be increased or decreased in an attempt to reach the optimal value

In order to reach the optimal value, the variable parameters in the set of geometric parameters may be changed taking into consideration posterior distribution of the set of geometric parameters according to the image observation model. Since the posterior distribution is difficult to derive analytically, a Variational Bayes formulation can be used as an approximate inference technique to find the adequate optical geometric configuration.

Alternative optimization strategies can be used such as grid search strategies, sampling approaches like Markov Chain Monte Carlo (MCMC), newton methods, gradient descent, stochastic gradient descent or other strategies which may help finding rapidly the optimal geometric configuration.

When the model correspondence value indicative of how likely the image observation model corresponds to the image geometric model reaches the optimal value, the gaze direction of the user's eye or any other eye geometric parameter of interest is retrieved under step g. from the latest image geometric model that has been generated.

There are various methodologies to determine how likely the input image observation 10 corresponds to the image geometric model as discussed in detail hereafter.

In an advantageous embodiment and with reference to Figures 2, 4 and 5, the input image observation 10 is passed through a segmentation neural network 12 to discriminate the distinctive eye regions of the input image observation 10. In the context of the invention, the segmentation of the input image observation 10 allows to discriminate several semantic regions among a group of regions comprising the cornea/iris region, the sclera region, the pupil region and the eyelid region. The use of semantic regions allows decoupling the gazing process and the user eye geometry from the ambient or sensing conditions.

The segmentation results in a plurality of image segmentation maps NS¹, NS², NS³, each image segmentation map indicating the probability that pixels of one input image observation belongs to one semantic region, i.e., to distinctive eye region such as for example iris, sclera, pupil or eyelid.

In an embodiment, the segmentation map may not have a probabilistic interpretation, but still deliver values representative as how likely it is for a pixel to belong to either of the distinct region. Such non-probabilistic measurements can here be referred as a score.

In a preferred embodiment, each image segmentation map NS¹, NS², NS³ is a probability map indicating a probability at each pixel that this pixel belongs to the corresponding distinctive eye region. For example, as shown in Figure 4, a first image segmentation map NS¹ may be established for the eyelid and indicates the probability, log probability or score that each pixel of the input image observation 10 belongs to the eyelid; a second segmentation map NS² may be established for the pupil/cornea and indicates the probability that each pixel of the input image observation 10 belongs to the pupil/cornea; a third segmentation map NS³ may be established for the sclera and indicates the probability that each pixel of the input image observation 10 belongs to the sclera, etc.

Independently from the segmentation process of the input image observation 10 through the segmentation neural network 12, a parametric segmentation PS of the image geometric model is calculated from the set of parameters θ to discriminate distinctive eye regions of the image geometric model, resulting into one or a plurality of parametric segmentation maps.

More particularly, the parametric segmentation PS results into a set of parametric segmentation maps containing each a single distinctive eye region of the geometric model which is different to the single distinctive eye region belonging to the other two parametric segmentation maps. For example, as shown in figure 3, a first, second and third parametric segmentation maps PS¹, PS², PS³ contain each the portion of the geometric model corresponding respectively to the eyelid region 20a, the iris/cornea region 20b, and the sclera region 20c in order to determine which pixels belong to each of these eye regions

For example, if pixel 1 on the first parametric segmentation map PS¹ belongs to the eyelid region, then this pixel will be assigned to the eyelid region no matter what the second and third segmentation maps PS², PS³ contain. If a pixel is not in the eyelid region 20a such as pixels 2, 3, then it will be assigned to the iris/cornea region 20b if it also falls within the iris/cornea region. Otherwise, it will be assigned to the sclera region 20c. Each pixel of each parametric segmentation map PS¹, PS², PS³ is therefore assigned to the corresponding distinctive eye region of the image geometric model 10 having the same coordinates through a direct and deterministic function of the set of geometrical parameters θ.

The segmentation neural network 12 generates three image segmentation maps NS¹, NS², NS³. Each image segmentation map NS¹, NS², NS³ assigns a probability, a log probability or score discrete value to each of its pixels to belong to a distinctive eye region of the input image observation 10. In other words, each image segmentation map may be seen as a probabilistic model that provides an estimation on how likely each of its pixels and the corresponding pixel of the input image observation 10 with the same coordinates belong to the same distinctive eye region. The first, second and third image segmentation maps NS¹, NS², NS³ are probabilistic models, as explained above, for example respectively for the cornea region, the sclera region and the eyelid region of the input image observation 10. Each pixel of each image segmentation map NS¹, NS², NS³ is assigned with a probability or a log probability discrete value to belong to the same distinctive eye region as the pixel of the input image observation having the same coordinates. The classification (probability assignment) of each pixel of the input image observation is performed by the learning machine, for example by a neural network, and may depend for example on its colour, brightness, spatial context, inter region relations and position.

As illustrated in Figure 5, in the evaluation process of the direction of the gaze of the user, each pixel of the eyelid region 20a, the iris/cornea region 20b and the sclera region 20c of the corresponding parametric segmentation map PS¹, PS², PS³ is compared with the pixel of the corresponding image segmentation map NS¹, NS², NS³ having the same coordinates to determine how likely the input image observation 10 correspond to the image geometric model. More particularly, the probability or log probability discrete value of each pixel of each image segmentation map NS¹, NS², NS³ are selected only if the estimated distinctive eye region (i.e. the cornea/iris region, the sclera region and the eyelid region) of said each pixel corresponds to the distinctive eye region (i.e. the cornea/iris region, the sclera region and the eyelid region) assigned to the corresponding pixel with the same coordinates of the corresponding parametric segmentation map PS¹, PS², PS³.

The selected probability or log probability discrete values are added together to provide a value which is indicative of the probability that the input image observation correspond to the geometric model of the user's eye gazing at one particular direction. If the value is below the optimal value, one or more new image geometric models are generated, using the selected optimization step as discussed above, to find the adequate optical geometric configuration until the above value reaches the optimal value.

In another advantageous embodiment, instead of generating a hard-parametric segmentation map for each distinctive eye region for the image geometric model, a single soft parametric segmentation map of the image geometric model is calculated.

Three discrete values are assigned to each pixel of the soft parametric segmentation map. These discrete values represent each a probability or a log probability that each pixel of the soft parametric segmentation map corresponds to one of the three distinctive eye regions of the image geometric model, preferably the cornea/iris region, the sclera region and the eyelid region.

In parallel, the segmentation neural network 12 generates a single soft image segmentation map of the input image observation 10. At least three discrete values are assigned to each pixel of the soft image segmentation map. These discrete values represent each a probability or a log probability that each pixel of the soft image segmentation map corresponds to one of the at least three corresponding distinctive eye regions of the input image observation 10, preferably the cornea/iris region, the sclera region and the eyelid region.

The soft parametric and image segmentation maps are then merged together by multiplying each of said three discrete values assigned to each pixel of the parametric segmentation map with each of the corresponding three values assigned to each pixel of the soft image segmentation map with the same coordinates. The sum of the multiplied values for each pixel of said segmentation maps are indicative of how likely the model correspondence value corresponds to the image geometric model. Per pixel, this can be seen as a weighed sum of the probabilities given by the soft image segmentation map, where the weights are given by the soft parametric segmentation map.

Before the pixel-wise multiplication step, the soft image and/or parametric segmentation maps may be transformed through functions like the log, robust estimators. Moreover, the transformation may be such that a multiplication is no longer necessary and instead an addition or subtraction is performed.

The estimation of the eye-gaze direction and other eye-related geometric parameters of the user according to this embodiment may achieve better results accuracy as using soft parametric and image segmentation maps may better discriminate pixels located on adjacent edges of distinctive eye regions.

In an embodiment, the method comprises a step of computing how likely is a given geometric configuration (θ), independently of the image data, based solely on prior knowledge on the expected geometry. Prior knowledge on the expected geometry, also referred to as a prior term, can further be additively or multiplicatively combined with the estimates given by the image segmentation maps and parametric segmentation maps.

The segmentation neural network 12 comprises multiple layers configured to generate an image segmentation map for an input. The neural network can be composed by one or a sequence of encoding-decoding or hourglass layers that achieve a transformation of the input such that the image segmentation is of the same resolution as the input, or at least a pixel correspondence can be established between the image segmentation map and the input.

The neural network may for example contain Convolutional layers used in standard Convolutional Neural Network (CNN) designed to recognize visual patterns directly from pixel images with minimal pre-processing. The network may advantageously be enhanced with a Residual Neural Network (ResNET) architecture which can let the network go deeper without gradient vanishing to enhance the performance of the image segmentation process.

The CNN may for example comprise three parts, an encoder, ResNET building blocks and a decoder. The encoder is configured to extract and compress context information into a feature map and comprises three convolutional layers. In each convolutional layer, reflection padding is performed to enlarge the image, so the size remains the same under convolution operator. Stride is used in the second and third convolutional layers to shrink the image.

The segmentation neural network 12 may comprise for example six ResNET building blocks. In each building block, there are two convolutional layers and each convolutional layer is followed by Batch Normalization and Rectified Linear Units (ReLU). The output of the final ReLU is added to the input feature map of the building block. The six RestNET building blocks are concatenated one by one. The size of the feature maps remains the same since no pooling and no stride are done inside the blocks.

The decoder, which follows the ResNET building blocks, is adapted to expand the feature map and infer the pixel categories. It contains two de-convolutional layers with stride. Both de-convolutional layers are followed by Batch Normalization and ReLU units. The decoder is configured to infer and recover objective information. The ResNET building blocks extend the encoder to refine the feature map.

The segmentation neural network may have been previously trained with UnityEYE which is a tool that can synthesize various age images with different skins, different eye shapes and different iris locations. Some of the data could be used for training, whereas others can be used for validation or testing. Other tools for synthetic data generation may be used.

The segmentation neural network training can also be enhanced by using training data from multiple modalities, such as RGB, infrared, SWIR, or any other variant, provided that annotations of pixel classes are available for the samples.

The segmentation neural network may also be trained first under a complex architecture, but its knowledge transferred to a more compact network through distillation strategies.

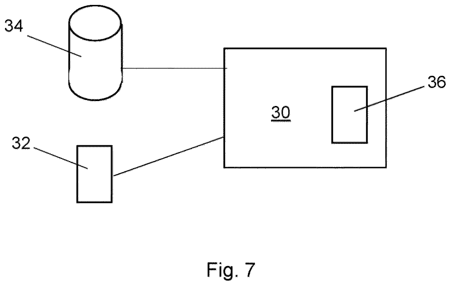

Figure 7 schematically illustrates an apparatus for estimating an eye-gaze direction of the user. The apparatus may include a computing system 30, such as a personal computer, a server, a smartphone, a wearable computer or an optical head-mounted display such as Google Glass for example. An image capture element 32 such as a camera is connected or integrated to the computing system 30 for retrieving images of a user's face. A database 34 is used as part of the computing system 30 for storing user-specific parameters. The computing system 30 further includes a computer readable storage medium 36 storing a computer program comprising a set of algorithms of the segmentation neural network.

It has to be noted that depending on the embodiment, certain steps of the method according to the invention may be performed in different sequences or may be performed concurrently rather than sequentially.

Various modification and variations to the described embodiments of the invention will be apparent to those skilled in the art without departing from the scope of the invention as defined in the appended claims.

## Claims

1. A method for estimating eye-related geometric parameters (θ) of a user, comprising the steps of:
a. retrieving at least one input image observation (10) corresponding to an image of the user's eye comprising distinctive eye regions;
b. using a learning machine for computing one or a plurality of image segmentation maps (NS¹, NS², NS³), so as to classify each pixel of said input image observation into at least one among a plurality of distinctive eye regions;
c. generating through a set of geometric parameters an image geometric model of the user's eye;
d. comparing the image geometric model with at least one image segmentation map;
e. based on this comparison, computing a model correspondence value indicating if said at least one input image observation (10) corresponds to the geometric model of the user's eye;
f. repeating steps c. to e. if the value computed under step e. is below an optimal value wherein at least one parameter in the set of geometric parameters (θ) is changed under step c. to generate a new image geometric model of a user's eye for each iteration of steps c. to e. until said model correspondence value reaches the optimal value, and
g. retrieving the eye-related geometric parameters (θ) from the latest image geometric model of the user's eye that has been generated.

2. Method of claim 1, wherein said at least one input image observation (10) is augmented by providing data obtained from supervised, semi-supervised or unsupervised calibration procedures.

3. Method of claim 1 or 2, wherein said eye-related geometric parameters (θ) correspond to an eye gaze direction of the user, and wherein:
- the image geometric model of the user's eye under step c. corresponds to user's eye gazing at one particular direction,
- said at least one parameter in the set of geometric parameters (θ) is changed under step c. to generate a new image geometric model of a user's eye gazing at another direction for each iteration of steps c. to e. until said model correspondence value reaches said optimal value, and
- the gaze direction is retrieved under step g. from said latest image geometric model.

4. Method of any preceding claim, wherein at least one parametric segmentation map (PS) is calculated from said image geometric model of the user's eye, wherein each pixel of said parametric segmentation map is classified into at least one among a plurality of distinctive eye regions (20a, 20b, 20c).

5. Method of the preceding claim, wherein each pixel of said parametric segmentation map (PS) indicates at least one probability, log probability or score that this pixel belongs to at least one distinctive eye region (20a, 20b, 20c).

6. Method of the preceding claim, wherein a plurality of parametric segmentation maps (PS¹, PS², PS³) are calculated from said image geometric model, each said parametric segmentation map indicating to which distinctive eye region (20a, 20b, 20c) each pixel of a projection of said image geometric model belongs, or a probability, a log probability or a score associated with each pixel of a projection of said image geometric model that this pixel belongs to one distinctive eye region.

7. Method of claims 5 or 6, wherein said step d. comprises comparing the probability, log probability or score assigned to each pixel of at least one image segmentation map (NS¹, NS², NS³) with the value of a pixel of at least one parametric segmentation map (PS) having the same coordinates.

8. Method of any of claims 5 to 7, comprising:
- determining from at least one parametric segmentation map (PS) the distinctive region (20a, 20b, 20c) to which each pixel is supposed to belong according to the image geometric model;
- as part of step d., determining from the at least one image segmentation map (NS¹, NS², NS³) a pixel correspondence value corresponding to that distinctive region and indicating the probability, log probabilities or scores that this pixel belongs to that distinctive region;
- as part of step e., adding said pixel correspondence values together to provide said model correspondence value .

9. Method of any preceding claim, wherein at least one soft parametric segmentation map of the image geometric model is calculated from said image geometric model of the user's eye, at least two values, preferably at least three values, being assigned to each pixel of said soft parametric segmentation map, said values representing a probability, a log probability or a score that each pixel corresponds to each of said distinctive eye regions of said image geometric model.

10. Method of claim 9, wherein at least three values are assigned to each pixel of said image segmentation map, said at least three values representing a probability, a log probability or a score that each pixel corresponds to each of said distinctive eye regions of said at least one input image observation (10).

11. Method of claim 10, wherein said soft parametric and image segmentation maps are merged together by multiplying each of said at least three values assigned to each pixel of the parametric segmentation map with each of the corresponding at least three values assigned to each pixel of the image segmentation map with the same coordinates, and adding the multiplied values for each pixel of said segmentation maps to provide said model correspondence value.

12. Method of any preceding claim, wherein said image segmentation maps are image probability maps indicating a probability or log probability associated with each pixel that this pixel belongs to one distinctive eye region.

13. Method of any of claims 1 to 11, wherein said image segmentation maps are image score maps indicating the score associated with each pixel that this pixel belongs to one distinctive eye region.

14. An apparatus for estimating eye-related geometric parameters (θ), comprising:
- a camera (32) for capturing a user's face;
- a database (34) storing user-specific eye and facial geometric parameters, and
- a computing system (30) comprising a memory (36) storing a computer program configured to perform the method of any preceding claim.

15. A computer readable storage medium storing a computer program, the computer program comprising a set of algorithms configured to perform the method of any of claims 1 to 13.

## Patentansprüche

1. Ein Verfahren zum Schätzen von augenbezogenen geometrischen Parametern (θ) eines Benutzers, die folgenden Schritte umfassend:
a. Abrufen von mindestens einer Eingabebildbeobachtung (10), welche einem Bild des Auges des Benutzers entspricht, welches charakteristische Augenbereiche umfasst;
b. Verwenden einer Lernmaschine zum Berechnen einer oder mehrerer Bildsegmentierungskarten (NS¹, NS², NS³), um jedes Pixel der besagten Eingabebildbeobachtung in mindestens eine von mehreren charakteristischen Augenregionen zu klassifizieren;
c. Erzeugen eines Bildgeometriemodells des Auges des Benutzers anhand einer Reihe geometrischer Parameter;
d. Vergleichen des Bildgeometriemodells mit mindestens einer Bildsegmentierungskarte;
e. basierend auf diesem Vergleich, Berechnen eines Modellkorrespondenzwertes, welcher angibt, ob die mindestens eine besagte Eingabebildbeobachtung (10) dem geometrischen Modell des Auges des Benutzers entspricht;
f. Wiederholen der Schritte c. bis e., wenn der unter Schritt e. berechnete Wert unter einem optimalen Wert liegt, worin unter Schritt c. mindestens ein Parameter im Satz von geometrischen Parametern (θ) geändert wird, um für jede Iteration der Schritte c. bis e. ein neues Bildgeometriemodell eines Auges des Benutzers zu erzeugen, bis der besagte Modellkorrespondenzwert den optimalen Wert erreicht, und
g. Abrufen der augenbezogenen geometrischen Parameter (θ) aus dem zuletzt generierten Bildgeometriemodell des Auges des Benutzers.

2. Verfahren gemäss Anspruch 1, worin die besagte mindestens eine Eingabebildbeobachtung (10) durch Bereitstellung von Daten erweitert wird, welche aus überwachten, halbüberwachten oder unüberwachten Kalibrierungsverfahren gewonnen wurden.

3. Verfahren gemäss Anspruch 1 oder 2, worin die besagte augenbezogenen geometrischen Parameter (θ) einer Blickrichtung des Benutzers entsprechen, und worin:
- das Bildgeometriemodell des Auges des Benutzers gemäss Schritt c. dem Blick des Benutzers in eine bestimmte Richtung entspricht,
- der besagte mindestens eine Parameter im Satz von geometrischen Parametern (θ) unter Schritt c. geändert wird, um für jede Iteration der Schritte c. bis e. ein neues Bildgeometriemodell des in eine andere Richtung blickenden Auges eines Benutzers zu erzeugen, bis der besagte Modellkorrespondenzwert den besagten optimalen Wert erreicht, und
- die Blickrichtung gemäss Schritt g. aus dem besagten neuesten Bildgeometriemodell abgerufen wird.

4. Verfahren gemäss irgendeinem der vorhergehenden Ansprüche, worin aus dem besagten Bildgeometriemodell des Auges des Benutzers mindestens eine parametrische Segmentierungskarte (PS) berechnet wird, worin jedes Pixel der besagten parametrischen Segmentierungskarte in mindestens eine von mehreren charakteristischen Augenregionen (20a, 20b, 20c) klassifiziert wird.

5. Verfahren gemäss dem vorhergehenden Anspruch, worin jedes Pixel der besagten parametrischen Segmentierungskarte (PS) mindestens eine Wahrscheinlichkeit, eine Log-Wahrscheinlichkeit oder eine Punktzahl dafür angibt, dass dieses Pixel zu mindestens einer charakteristischen Augenregion (20a, 20b, 20c) gehört.

6. Verfahren gemäss dem vorhergehenden Anspruch, worin aus dem besagten Bildgeometriemodell eine Vielzahl von parametrischen Segmentierungskarten (PS¹, PS², PS³) berechnet werden, wobei jede parametrische Segmentierungskarte angibt, zu welcher charakteristischen Augenregion (20a, 20b, 20c) jedes Pixel einer Projektion des besagten Bildgeometriemodells gehört, oder eine Wahrscheinlichkeit, eine Log-Wahrscheinlichkeit oder eine Punktzahl angibt, welche mit jedem Pixel einer Projektion des besagten Bildgeometriemodells verknüpft ist, dass dieses Pixel zu einer charakteristischen Augenregion gehört.

7. Verfahren gemäss Anspruch 5 oder 6, worin der besagte Schritt d. das Vergleichen der Wahrscheinlichkeit, der Log-Wahrscheinlichkeit oder der Punktzahl, welche jedem Pixel von mindestens einer Bildsegmentierungskarte (NS¹, NS², NS³) zugewiesen ist, mit dem Wert eines Pixels von mindestens einer parametrischen Segmentierungskarte (PS) mit denselben Koordinaten umfasst.

8. Verfahren gemäss irgendeinem der Ansprüche 5 bis 7, umfassend:
- Bestimmen der charakteristischen Region (20a, 20b, 20c), zu welcher jedes Pixel gemäss dem Bildgeometriemodell gehören soll, aus mindestens einer parametrischen Segmentierungskarte (PS);
- als Teil von Schritt d., Bestimmen eines Pixelkorrespondenzwerts aus der mindestens einen Bildsegmentierungskarte (NS¹, NS², NS³), welcher dieser charakteristischen Region entspricht und welcher die Wahrscheinlichkeit, die Log-Wahrscheinlichkeiten oder die Punktzahl angibt, dass dieses Pixel zu dieser charakteristischen Region gehört;
- als Teil von Schritt e., Zusammenaddieren der besagten Pixelkorrespondenzwerte, um den besagten Modellkorrespondenzwert bereitzustellen.

9. Verfahren gemäss irgendeinem der vorhergehenden Ansprüche, worin aus dem besagten Bildgeometriemodell des Auges des Benutzers mindestens eine weiche parametrische Segmentierungskarte des Bildgeometriemodells berechnet wird, wobei jedem Pixel der besagten weichen parametrischen Segmentierungskarte mindestens zwei, vorzugsweise mindestens drei Werte zugewiesen werden, wobei die besagten Werte eine Wahrscheinlichkeit, eine Log-Wahrscheinlichkeit oder eine Punktzahl dafür darstellen, dass jedes Pixel jedem der besagten charakteristischen Augenbereiche des besagten Bildgeometriemodells entspricht.

10. Verfahren gemäss Anspruch 9, worin jedem Pixel der besagten Bildsegmentierungskarte mindestens drei Werte zugewiesen werden, wobei die besagten mindestens drei Werte eine Wahrscheinlichkeit, eine Log-Wahrscheinlichkeit oder eine Punktzahl darstellen, dass jedes Pixel jedem der besagten charakteristischen Augenbereiche der besagten mindestens einen Eingabebildbeobachtung (10) entspricht.

11. Verfahren gemäss Anspruch 10, worin die besagten weichen parametrischen und Bildsegmentierungskarten zusammengeführt werden, indem jeder der besagten mindestens drei, jedem Pixel der parametrischen Segmentierungskarte zugewiesenen Werte mit jedem der entsprechenden mindestens drei jedem Pixel der Bildsegmentierungskarte mit denselben Koordinaten zugewiesenen Werte multipliziert werden, und indem die multiplizierten Werte für jedes Pixel der besagten Segmentierungskarten addiert werden, um den besagten Modellkorrespondenzwert bereitzustellen.

12. Verfahren gemäss irgendeinem der vorhergehenden Ansprüche, worin die besagten Bildsegmentierungskarten Bildwahrscheinlichkeitskarten darstellen, welche eine mit jedem Pixel verknüpfte Wahrscheinlichkeit oder Log-Wahrscheinlichkeit angeben, dass dieses Pixel zu einer charakteristischen Augenregion gehört.

13. Verfahren gemäss irgendeinem der Ansprüche 1 bis 11, worin die besagten Bildsegmentierungskarten Bildpunktzahlkarten darstellen, welche die mit jedem Pixel verknüpfte Punktzahl angeben, dass dieses Pixel zu einer charakteristischen Augenregion gehört.

14. Eine Vorrichtung zum Schätzen von augenbezogener geometrischen Parametern (θ), umfassend:
- eine Kamera (32) zum Erfassen des Gesichts eines Benutzers;
- eine Datenbank (34), in welcher benutzerspezifische geometrische Augen- und Gesichtsparameter gespeichert sind, und
- ein Computersystem (30), welches einen Speicher (36) umfasst, der ein Computerprogramm speichert, das zum Ausführen des Verfahrens eines der vorhergehenden Ansprüche konfiguriert ist.

15. Ein computerlesbares Speichermedium, welches ein Computerprogramm speichert, wobei das Computerprogramm einen Satz von Algorithmen umfasst, welche zum Ausführen des Verfahrens gemäss irgendeinem der Ansprüche 1 bis 13 konfiguriert sind.

## Revendications

1. Procédé pour estimer des paramètres géométriques (θ) liés à l'œil d'un utilisateur, comprenant les étapes suivantes :
a. récupérer au moins une observation d'image d'entrée (10) correspondant à une image de l'œil de l'utilisateur comprenant des régions oculaires distinctes ;
b. utiliser une machine d'apprentissage pour calculer une ou plusieurs cartes de segmentation d'image (NS¹, NS², NS³), de manière à classer chaque pixel de ladite observation d'image d'entrée dans au moins une parmi une pluralité de régions oculaires distinctives ;
c. générer, grâce à un ensemble de paramètres géométriques, un modèle géométrique d'image de l'œil de l'utilisateur ;
d. comparer le modèle géométrique d'image avec au moins une carte de segmentation d'image ;
e. sur la base de cette comparaison, calculer une valeur de correspondance de modèle indiquant si ladite au moins une observation d'image d'entrée (10) correspond au modèle géométrique de l'œil de l'utilisateur ;
f. répéter les étapes c. à e. si la valeur calculée à l'étape e. est inférieure à une valeur optimale dans laquelle au moins un paramètre dans l'ensemble de paramètres géométriques (θ) est modifié à l'étape c. pour générer un nouveau modèle géométrique d'image de l'œil d'un utilisateur pour chaque itération des étapes c. à e. jusqu'à ce que ladite valeur de correspondance de modèle atteigne la valeur optimale, et
g. récupérer les paramètres géométriques associés à l'œil (θ) à partir du dernier modèle géométrique d'image de l'œil de l'utilisateur qui a été généré.

2. Procédé selon la revendication 1, dans lequel ladite au moins une observation d'image d'entrée (10) est augmentée en fournissant des données obtenues à partir de procédures d'étalonnage supervisées, semi-supervisées ou non supervisées.

3. Procédé selon la revendication 1 ou 2, dans lequel lesdits paramètres géométriques liés à l'œil (θ) correspondent à une direction du regard de l'utilisateur, et dans lequel :
- le modèle géométrique image de l'œil de l'utilisateur à l'étape c. correspond à l'œil de l'utilisateur regardant dans une direction particulière,
- ledit au moins un paramètre dans l'ensemble des paramètres géométriques (θ) est modifié à l'étape c. pour générer un nouveau modèle géométrique d'image de l'œil d'un utilisateur regardant dans une autre direction pour chaque itération des étapes c. à e. jusqu'à ladite valeur de correspondance de modèle atteint ladite valeur optimale, et
- la direction du regard est récupérée à l'étape g. à partir dudit dernier modèle géométrique d'image.

4. Procédé selon l'une quelconque des revendications précédentes, dans lequel au moins une carte de segmentation paramétrique (PS) est calculée à partir dudit modèle géométrique d'image de l'œil de l'utilisateur, dans lequel chaque pixel de ladite carte de segmentation paramétrique est classé dans au moins une parmi une pluralité de régions oculaires distinctives (20a, 20b, 20c).

5. Procédé selon la revendication précédente, dans lequel chaque pixel de ladite carte de segmentation paramétrique (PS) indique au moins une probabilité, une probabilité logarithmique ou un score selon lequel ce pixel appartient à au moins une région oculaire distinctive (20a, 20b, 20c).

6. Procédé selon la revendication précédente, dans lequel une pluralité de cartes de segmentation paramétrique (PS¹, PS², PS³) sont calculées à partir dudit modèle géométrique d'image, chacune desdites cartes de segmentation paramétrique indiquant à quelle région distinctive de l'œil (20a, 20b, 20c) chaque pixel d'une projection dudit modèle géométrique d'image appartient, ou une probabilité, une probabilité logarithmique ou un score associé à chaque pixel d'une projection dudit modèle géométrique d'image, que ce pixel appartient à une région oculaire distinctive.

7. Procédé selon les revendications 5 ou 6, dans lequel ladite étape d. comprend la comparaison de la probabilité, de la probabilité logarithmique ou du score attribué à chaque pixel d'au moins une carte de segmentation d'image (NS¹, NS², NS³) avec la valeur d'un pixel d'au moins une carte de segmentation paramétrique (PS) ayant les mêmes coordonnées.

8. Procédé selon l'une quelconque des revendications 5 à 7, comprenant :
- de déterminer à partir d'au moins une carte de segmentation paramétrique (PS) la région distinctive (20a, 20b, 20c) à laquelle chaque pixel est censé appartenir selon le modèle géométrique de l'image ;
- dans le cadre de l'étape d., de déterminer à partir de ladite au moins une carte de segmentation d'image (NS¹, NS², NS³) une valeur de correspondance de pixel correspondant à cette région distinctive et indiquant la probabilité, les probabilités logarithmiques ou les scores que ce pixel appartient à cette région distinctive ;
- dans le cadre de l'étape e., additionner ensemble lesdites valeurs de correspondance de pixels pour fournir ladite valeur de correspondance de modèle.

9. Procédé selon l'une quelconque des revendications précédentes, dans lequel au moins une carte de segmentation paramétrique douce du modèle géométrique d'image est calculée à partir dudit modèle géométrique d'image de l'œil de l'utilisateur, au moins deux, de préférence au moins trois valeurs étant attribuées à chaque pixel de ladite carte de segmentation paramétrique douce, lesdites valeurs représentant une probabilité, une probabilité logarithmique ou un score que chaque pixel corresponde à chacune desdites régions oculaires distinctives dudit modèle géométrique d'image.

10. Procédé selon la revendication 9, dans lequel au moins trois valeurs sont attribuées à chaque pixel de ladite carte de segmentation d'image, lesdites au moins trois valeurs représentant une probabilité, une probabilité logarithmique ou un score selon lequel chaque pixel correspond à chacune desdites régions oculaires distinctives de ladite au moins une observation d'image d'entrée (10).

11. Procédé selon la revendication 10, dans lequel lesdites cartes paramétriques douces et de segmentation d'image sont fusionnées en multipliant chacune desdites au moins trois valeurs attribuées à chaque pixel de la carte de segmentation paramétrique par chacune des au moins trois valeurs correspondantes attribuées à chaque pixel de la carte de segmentation d'image avec les mêmes coordonnées, et en additionnant les valeurs multipliées pour chaque pixel desdites cartes de segmentation pour fournir ladite valeur de correspondance de modèle.

12. Procédé selon l'une quelconque des revendications précédentes, dans lequel lesdites cartes de segmentation d'image sont des cartes de probabilité d'image indiquant une probabilité ou une probabilité logarithmique associée à chaque pixel que ce pixel appartient à une région oculaire distinctive.

13. Procédé selon l'une quelconque des revendications 1 à 11, dans lequel lesdites cartes de segmentation d'image sont des cartes de scores d'image indiquant le score associé à chaque pixel que ce pixel appartient à une région oculaire distinctive.

14. Appareil pour estimer des paramètres géométriques liés à l'œil (θ), comprenant :
- une caméra (32) pour capturer le visage d'un utilisateur ;
- une base de données (34) stockant des paramètres géométriques oculaires et faciaux spécifiques à l'utilisateur, et
- un système informatique (30) comprenant une mémoire (36) stockant un programme informatique configuré pour exécuter le procédé selon l'une quelconque des revendications précédentes.

15. Support de stockage lisible par ordinateur stockant un programme informatique, le programme informatique comprenant un ensemble d'algorithmes configurés pour exécuter le procédé selon l'une quelconque des revendications 1 à 13.
